# EUROPEAN PATENT APPLICATION

(11) **EP 2 611 096 A1**
(43) Date of publication of application: **03.07.2013**
(21) Application number: 11306794.6
(22) Date of filing: 28.12.2011
(51) Int. Cl.: H04L 29/06, G06F 21/00

(54) **Method for authenticating a user using a second mobile device**

(71) Applicant: Gemalto SA, 92190 Meudon (FR)
(72) Inventor: Gautier, Arnaud, 92190 MEUDON (FR)

(57) **Abstract**

The invention relates to a method for authenticating a user from a first mobile device (1) to an application server (4), **characterized in that** it comprises
a. a step (S3) of sending by the application server (4) to the first mobile device (1) in a login web page a one time data code so as to identify a current session of an application;
b. a step (S5) of requesting by the application server (4) to an authentication server (3) login data related to the current session and an application identifier (ID_QR) extracted from said one time data code;
c. a step of extracting said application identifier (ID_QR) from said one time data code with a second mobile device (2) of the user;
d. a step (S6) of sending login data related to the current session with the application identifier by the second mobile device (2) to the authentication server gateway (3);
e. a step (S9) of sending login data to the first mobile device (1) to the by the authentication server gateway (3).

## Description

### FIELD OF THE INVENTION

The present invention relates generally to authentication and more specifically to a method for an authentication to a content provider by a user.

### BACKGROUND OF THE INVENTION

Currently security is becoming more and more important and is more and more a priority for many content provider, for example Facebook provides OTP SMS in addition to login/password, full https support,...

A web content provider offers a login/password type for authenticating someone and in many cases a user has to remember a lot of couple login/password or uses the same password for different content providers, or in may cases he uses very weak passwords such as a family name, a date of birth, ...

Password manager applications consit in registering different passwords by a same application on a same PC. Unfortunatly such applications do not necessarily offer much portability. They are not integrated with content provider. Indeed a user has to login with the same device on which such application is installed. The storage of the login&password storage on the PC is then less secured. There is a need to download and install additional softwares. PKI :
A Public Key Infrastructure solution requires heavy deployment and maintenance cost on backend.

Other solutions proposes to a user to pre-register his phone number to his account. When trying to log-in, he submit its login and password as usual, but then the content provider requests the user to enter a one-time-password (OTP). At the same time, this OTP is sent by SMS to the number pre-registered to the user. The user has then to enter this OTP on the web page to finalize his login operation.

There is a need for an easier solution which provides less user interactions and a better user experience.

It is then an object of the invention to provide a method for an authentication to a content provider by a user.

Thereto, the present invention provides a method for authenticating a user from a first mobile device to an application server, **characterized in that** it comprises a step of sending by the application server to the first mobile device in a login web page a one time data code so as to identify a current session of an application; a step of requesting by the application server to an authentication server login data related to the current session and an application identifier extracted from said one time data code; a step of extracting said application identifier from said one time data code with a second mobile device of the user; a step of sending login data related to the current session with the application identifier by the second mobile device to the authentication server gateway; a step of sending login data to the first mobile device to the by the authentication server gateway.

According to other aspects of the invention, the method may comprise taking a picture or scanning the one time data code with the second mobile device.

According to other aspects of the invention, the method may comprise a step of generating a challenge by the application server.

According to other aspects of the invention, the challenge may be included into the one time data code.

According to other aspects of the invention, the method may comprise a step of sending said challenge to the authentication gateway during the step of requesting by the application server to the authentication server login data related to the current session and the application identifier extracted from the one time data code.

According to other aspects of the invention, the method may comprise the step of giving a unique Callback URL by the application server so as the authentication server gateway returns immediately.

According to other aspects of the invention, the method may comprise a step of requesting the login data by the authentication gateway server to the application server, said request targeting the callback url.

According to other aspects of the invention, the method may comprise a step of sending a response to the step of requesting the login data by the authentication gateway server to the application server after the step of sending a response to the first mobile device.

According to other aspects of the invention, the method may comprise a step of entering a PIN code before the step of sending login data related to the current session with the application identifier by the second mobile device to the authentication server gateway.

According to other aspects of the invention, the one time password may be an QR code.

This solution provides a simple and easy way to use a password manager and a way to integrate with content providers.

The various aspects, features and advantages of the invention will become more fully apparent to those having ordinary skill in the art upon careful consideration of the following Detailed Description, given by way of example thereof, with the accompanying drawings described below:
**FIG.1** schematically shows a flowchart diagram of a first embodiment.
**FIG.2** schematically shows a flowchart diagram of a second embodiment.

### DETAILED DESCRIPTION

The present invention may be understood according to the detailed description provided herein.

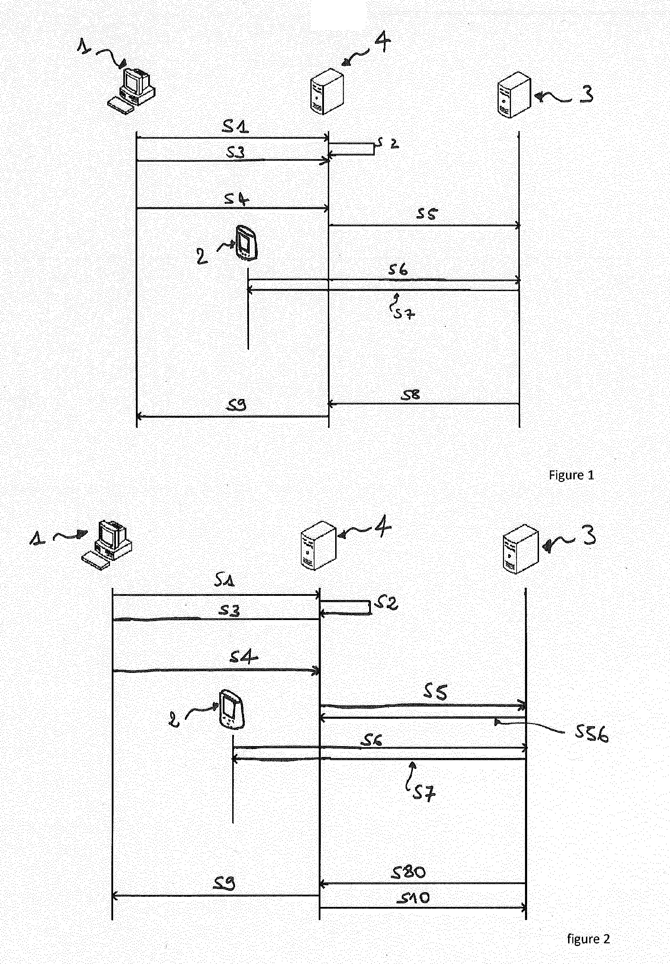

Shown in figure 1 is an authentication system comprising a first mobile device 1 and a second mobile device 2 of a user such as for example a perconnal computer 1 and a mobile phone 2, an authentication server gateway 3, and an application server or content provider 4.

The mobile device 2 comprises a secure element or keystore, i.e. for example an embedded secured element, a removable secured element like a UICC, or simply a keystore in a mobile device, ... non represented, on which there is an application adapted for login/password management. This application is for example responsible for storing securely the login/password in the keystore, or in the secured element, ..., to provide a way for the user to edit its login/password inside the application, and to exchange securely those login/passwords with the authentication server gateway.

The content provider 4 integrates with the authentication server gateway 3. In this embodiment the authentication server gateway 3 is a standalone authentication gateway which communicates with the authentication gateway server 3 for example over HTTP(S). This can be achieved by different ways: at network level by using VPN between both parties. Communication protocol is HTTPS and at authentication level, dual authentication can be used.

It will be well understood that the authentication server gateway 3 may also be a logical module inside the content provider 4.

The method according to the invention comprises opening a browser from the first mobile device 1, and requesting a web page from the application server 4 through an HTTP request in a step S1. In response to this HTTP request received from the first mobile device 1, the application sever 4 returns an HTTP response in a step S2. A login page is then displayed for authenticating the user and comprises traditional login/password input fields on the login page. This login page also offers a second possibility to login. This second possibility requires no user input on the web page and is explained further.

The login page also comprises a QR code which encodes an application identifier so as to identify the current application, e.g. the current HTTP session the user has trying to connect to.

The QR code is only associated to the HTTP session that the user wants to start. Thus when the user will resquest another HTTP session to the application server 3, a new QR code will be generated by the application server 3. The QR code is a one time QR code dedicated to be used in relation with the current session.

The login step then consists in clicking on a "login" button or "login" field. No input from the user is required, e.g. no login, no password, no phone number... Once clicking on the dedicated field, the mobile device 1 sends a request to login to the application server 4 in a step S4 and still displays the QR code on the screen.

In a step S5, the application server 4 then reaches the authentication server gateway 3 as soon as it receives the login request of the step S4 so as to retreive the login and password for the current user HTTP session. For doing so, an HTTP request is sent to the authentication server gateway 3 requesting login data, e.g. the login and the password related to the current session and the current application identifier ID_QR.

In parallel to this step S5 of sending an HTTPS login/password request from the application server 4 to the authentication gateway 3, the user takes the second mobile device 2 and scans the QR code received on the login page from the application server 4 after the step S2.

It will be well understood that the second mobile device 2 comprises means for scanning or taking a picture of the QR code.

The QR code is treated by the application in the second mobile device 2. The method comprises analyzing the QR code from which the application gets the application identifier ID_QR uniquely related to the authentication session of the user.

The method comprises then the step of proposing to the user to choose the login/password data to submit for authenticating himself to the current application, e.g. the application on the second mobile device 2 proposes to the user to choose the login/password data. The application for this part of the invention works in a similar manner than a password manager application. The application retrieves the login and password from a keystore on the second mobile device 2 or from a secured element from the same device, ... For example if the embedded application has login and password for "google" and "facebook", then the right credentials based on the application identifier ID_QR are used from the QR code. The user chooses his login/password and clicks on a "login" button of his application on the second mobile device 2.

The method comprises then the step S6 of sending the login and password through HTTPS to the authentication gateway 3 with the identifier code ID_QR of the current application. In a step S7, the authentication gateway sends a HTTPS response to the HTTPS request sent in step S6.

A next step consists in comparing the received or incoming login/password received by the authentication gateway 3 from the second mobile device 2 with the pending request of step S5 received by the authentication gateway 3 from the application server 4. The authentication server gateway 4 is able to associate the pending HTTP request from the application server to the login/password received from the second mobile device 2 through the matching identifier code ID_QR.

Once the authentication server gateway 3 makes the relation between the current session and the login/password thanks to the application identifier ID_QR, the method comprises the step S8 of returning the login/password to the application server 4 by the authentication server 3.

The method then comprises a step S9 of sending an HTTPS response from the application server 4 to the initial login request of step S1. The application server 4 sends the login page response.

Thanks to the invention, if someone tries to get the QR code, it is not possible to get the login/password from the QR code. Such person can only steal the ID_QR identifier. This identifier is transient and applicable only to the single authentication request of the step S1. The application identifier itself does not allow to authenticate to other session as the current web session identifier ID_QR from the initial user is needed.

In another embodiment, for each login request from the first mobile device to an application server 4, in a step S12, after the step S1, a challenge is generated by the application server 4 and displayed on the login page. This challenge is submitted together with the QR code when the user tries to login in step S2.

The challenge is also submitted during step S5 by the application server 4 to the authentication server 3. It is for example included into the QR code scanned by the embedded application of the second mobile device 2. The challenge for example both appears on the login page for the user to read and inside the QR code.

In this embodiment, when the embedded application invites the user for accepting the login operation, e.g. before the step S6, the challenge read also from the QR code, is displayed to the user so as he can advantageously check that the session is bound to the login request of step S1.

In another embodiment, all access to the embedded application stored login&password are protected by an applicative PIN code. When enabled, the user must also enter applicative PIN Code for every login request. Thus before the user chooses the login/password to send to the authenticaton gateway in step S6, the method comprises requesting a PIN code to the user.

It will be well understood that request may be HTTP or HTTPS requests.

As represented in figure 2, in another embodiment, the application server 4 login system requires to scale more because the login request will last longer time. The end-user HTTP login request will finish after the end-user scan the QR code, accept the login, submit approval from second mobile device 2, .... Using this method, each HTTP login request by end-user lasts much longer time than traditional login because the application server needs to get the login/password from the authentication gateway and this step itself requires this QR code scanning, .... This time keeps system resource on hold for much longer time, i.e. from few hundreds ms to few seconds for example for a resource like TCP connection, ....

To workaround this problem at least between the application server and the authentication gateway, an alternative communication protocol is put in place between the application server 4 and the authentication server gateway 3. In this alternative solution, the authentication server gateway 3 returns immediately to requests received from the application server 4, keeps a context of pending requests, with the callback URL for each login request, and later use this callback URL for pushing the login/password information back to the application server through a HTTP request initiated by the authentication server gateway 3 to the application server 4 using this callback URL.

In this embodiment, in the step S5, the application server 4 also give a unique Callback URL so as the authentication server 3 returns immediately. The callback URL is the URL to request by HTTP(S) for the authentication server gateway 3 to notify the application server 4.. The authentication server gateway then returns a HTTPS response in a step S56.

When the response from the embedded application of the second mobile device 2 is received, e.g. after the step S6, the related pending request at the authentication server 3 is retrieved using the unique application identifier ID_QR as described previously. The login and password are pushed back to the application server 4 using a HTTP or HTTPS request to the callback URL and containing the login and password in a step S80.

After the application server 4 sends the HTTPS response S9 as in figure 1, the application server 4 sends an HTTPS response to the authentication gateway 4 in a step S10 as response to the HTTPS request of step S80.

It will be well understood that a single HTTP request can be used instead of of a HTTPS request or vice versa, and or a single HTTP or HTTPS request can be replaced by two HTTP or two HTTPS requests. The advantage of using callback URL is to lower system resource usage for both the application server 4 and the authentication server gateway 3. When using callback URL, the application server should advantageously implement timeout mechanism to prevent from the authentication server gateway 3 which may never request the callback URL.

Thanks to the invention, the user always has its credentials with him. Passwords are stronger and the method is advantageously easier to deploy.

Thanks to the invention, the user always has its credentials with him. Passwords are stronger and the method is advantageously easier to deploy.

## Claims

1. Method for authenticating a user from a first mobile device (1) to an application server (4), **characterised in that** it comprises
a. a step (S3) of sending by the application server (4) to the first mobile device (1) in a login web page a one time data code so as to identify a current session of an application;
b. a step (S5) of requesting by the application server (4) to an authentication server (3) login data related to the current session and an application identifier (ID_QR) extracted from said one time data code;
c. a step of extracting said application identifier (ID_QR) from said one time data code with a second mobile device (2) of the user;
d. a step (S6) of sending login data related to the current session with the application identifier by the second mobile device (2) to the authentication server gateway (3);
e. a step (S9) of sending login data to the first mobile device (1) to the by the authentication server gateway (3).

2. Method according to claim 1, **characterised in that** it comprises taking a picture or scanning the one time data code with the second mobile device (2).

3. Method according to claim 1 or 2, **characterised in that** it comprises a step (S12) of generating a challenge by the application server (4).

4. Method according to claim 3, **characterised in that** the challenge is included into the one time data code.

5. Method according to claim 3 to 4, **characterised in that** it comprises a step of sending said challenge to the authentication gateway during the step (S5) of requesting by the application server (4) to the authentication server (3) login data related to the current session and the application identifier (ID_QR) extracted from the one time data code.

6. Method according to claim 3 to 5, **characterised in that** it comprises the step of giving a unique Callback URL by the the application server (4) so as the authentication server gateway (3) returns immediately.

7. Method according to claim 6, **characterised in that** it comprises a step (S80) of requesting the login data by the authentication gateway server (3) to the application server (4), said request targeting the callback url.

8. Method according to claim 7, **characterised in that** it comprises a step (S10) of sending a response to the step (S80) of requesting the login data by the authentication gateway server (3) to the application server (4) after the step (S9) of sending a response to the first mobile device (1).

9. Method according to one of the preceding claims, **characterised in that** it comprises a step of entering a PIN code before the step (S6) of sending login data related to the current session with the application identifier by the second mobile device (2) to the authentication server gateway (3).

10. Method according to any of the preceding claim, **charatecrised in that** the one time password is an QR code.
